# NEUE EUROPÄISCHE PATENTSCHRIFT

(11) **EP 0 295 736 B2**
(45) Veröffentlichungstag und Bekanntmachung des Hinweises auf die Entscheidung über den Einspruch: **13.08.2003**
(45) Hinweis auf die Patenterteilung: 17.08.1994
(21) Anmeldenummer: 88201108.3
(22) Anmeldetag: 02.06.1988
(51) Int. Cl.: C08J 5/12, C09J 123/34, C08L 23/34

(54) **Haftmittel**
Anchoring agent
Agent d'accrochage

(30) Priorität: 17.06.1987 DE 3720218
(43) Veröffentlichungstag der Anmeldung: 21.12.1988
(73) Patentinhaber: Rohm and Haas Denmark Finance A/S, 1606 Copenhagen V (DK)
(72) Erfinder: Rullmann, Helmut, Dr., D-6000 Frankfurt am Main (DE); Gebhard, Manfred, D-6000 Frankfurt am Main (DE); Zellner, Adolf, Dr., D-6082 Mörfelden-Walldorf (DE)
(74) Vertreter: Maiwald, Walter, Dr. Dipl.-Chem.

(56) Entgegenhaltungen:
- EP-A- 0 051 798
- DE-A- 2 654 352
- DE-A- 3 508 176
- JP-A- 63 264 972
- US-A- 4 119 587
- US-A- 4 167 500
- US-A- 4 483 962
- A. Landrock "Adhesives Technology Handbook", Noyes Publication, 1985, S. 183-185, 189
- H. Warson "Synthetic Resin Emulsions", E. Benn ltd., London, 1972, S. 140-159
- Burke Palmason Chemical Company, Florida, Technical Information "Hypalon Latex HYP-605", 1984
- Dupont Elastomers Division, Technical Service Report "Hypalon Latexes", 1984

## Beschreibung

Die Erfindung betrifft ein Haftmittel zum Verbinden von natürlichen und synthetischen Elastomeren mit metallischen und nicht-metallischen Substraten auf Basis wäßriger Dispersionen unter Vulkanisationsbedingungen.

Haftmittel auf Basis organischer Lösungsmittel zum Verbinden von Kautschuk mit Metallen oder anderen nichtmetallischen Substraten unter Vulkanisationsbedingungen sind seit langem bekannt. Sie enthalten üblicherweise polymere Substanzen als Filmbildner, ein oder mehrere als Vernetzer wirkende, haftverbessernde Zusätze, Füllstoffe, Pigmente Verarbeitungshilfsmittel. Wegen des Gehaltes an organischen Lösungsmitteln weisen solche Haftmittel Nachteile hinsichtlich Umweltbelastung, toxischen Verhaltens und Brennbarkeit auf.

Des weiteren sind Haftmittel auf Basis wäßriger Dispersionen bekannt, die organische polymere Filmbildner und in Wasser dispergierte oder gelöste, als Vernetzer wirkende Substanzen, haftverbessernde Zusätze, Füllstoffe. Pigmente und Verarbeitungshilfsmittel enthalten.

Aus DE-A- 26 54 352 ist ein Haftmittel auf Basis wäßriger Polymerdispersionen zum Verbinden von natürlichem oder synthetischem Kautschuk mit metallischen oder nichtmetallischen Substraten unter Vulkanisationsbedingungen bekannt. Das vorbekannte Haftmittel enthält einen organischen Filmbildner, wie halogenhaltigen oder chlorsulfonierten Kautschuk, eine aromatische Polynitrosoverbindung, wie Dinitrosobenzol, haftverbessernde Zusätze und einen Coaktivator. Der Coaktivator des vorbekannten Verfahrens ist eine organofunktionelle Phosphonsäure oder ein Phosphorsäurepartialester, wie Vinylphosphonsäure Phosphorsäure-mono-aminoethylester. Der Gehalt an toxischen Phosphorverbindungen stellt im Umgang mit derartigen Haftmitteln einen Nachteil dar.

In dem aus DE-B- 17 19 093 vorbekannten Klebemittel auf Basis eines wäßrigen Vinylacetat/Ethylen-Copolymerisatlatex werden die Klebefilme durch Zusatz eines Vernetzungsmittels zum Copolymerisat hinsichtlich Lösungsmittelbeständigkeit und mechanischer Hochtemperatureigenschaften verbessert. Als Vernetzer dienen beispielsweise Triallylcyanurat und Glycidylacrylate.

Weiterhin ist aus der DE-A-3 035 181 ein Haftmittel auf Basis einer wäßrigen Dispersion eines organischen polymeren Filmbildners bekannt, bei dem stabile Dispersionen durch die Verwendung eines Copolymers als. Filmbildner erhalten werden, wobei der Filmbildner durch Emulsionspolymerisation eines chlorhaltigen Monomeren mit carboxylgruppenhaltigen Comonomeren erzeugt wird.

Das aus US-A- 4 119 587 bekannte Hartmittel auf Lösungsmittelbasis enthält neben einem halogenhaltigen Polymer, einer aromatischen Nitrosoverbindung, einem Bleisalz der Phosphorsäure oder einer organischen Dicarbonsäure noch eine Maleinimid-Verbindung, insbesondere Phenylen-bis-maleinimid. Die mit der Verwendung organischer Lösungsmittel verbundenen Nachteile, wie Toxizität, Brennbarkeit, Umweltbelastung, werden auch mit dem vorbekannten Haftmittel nicht vermieden.

Aus der EP-A-0 051 798 ist ebenfalls ein Haftmittel auf Lösungsmittelbasis bekannt, das als wesentliche Bestandteile Phenylen-bis-maleinimid, chlorsulfoniertes Polyethylen, chlorierten Naturkautschuk, Novolak sowie Füllstoffe enthält. Auch dieses Dokument zeigt keinen Weg auf, wie die schon genannten Nachteile, die mit der Verwendung organischer Lösungsmittel verbunden sind, überwunden werden können.

Die Nachteile der bisher bekannten Haftmittel auf wäßriger Basis sind ihre geringe Universalität in bezug auf die zu verarbeitenden Elastomere und die deutlich schlechteren Haftfestigkeitswerte im Vergleich zu den Haftmitteln auf Lösungsmittelbasis.

Aufgabe der vorliegenden Erfindung ist es daher, ein Haftmittel auf wäßriger Basis bereitzustellen, das universell zum Verbinden von verschiedenen Kautschuktypen mit metallischen und nichtmetallischen Substraten unter Vulkanisationsbedingungen einsetzbar ist, in seiner Leistungsfähigkeit den bekannten lösungsmittelhaltigen Haftmittelsystemen entspricht und deren anwendungstechnische Nachteile vermeidet.

Ausgehend von einem Haftmittel zum Verbinden von natürlichen und synthetischen Elastomeren mit metallischen und nichtmetallischen Substraten unter Vulkanisationsbedingungen auf Basis wäßriger Dispersionen, welches einen organischen polymeren Filmbildner, eine aromatische Polynitrosoverbindung, einen Coaktivator sowie ggf, übliche haftverbessernde Zusätze, Füllstoffe und Verarbeitungshilfsmittel enthält, besteht die Lösung der Aufgabe gemäß der Erfindung darin, daß die wäßrige Dispersion 100 Gew.-Teile des organischen polymeren Filmbildners in Form von chlorsulfoniertem Polyethylen.
5 bis 100 Gew.-Teile der aromatischen Polynitrosoverbindung,
5 bis 100 Gew.-Teile des aus Diallylacrylamid oder Phenylen-bis-maleinsäureimid bestehenden Coaktivators sowie
0 bis 200 Gew.-Teile haftverbessernde Zusätze enthält.

Mit derartigen Zusätzen des Haftmittels gemäß der Erfindung wird die Vernetzung des organischen Filmbildners ganz erheblich verbessert und eine gesteigerte Haftung des natürlichen oder synthetischen Polymers auf dem Substrat herbeigeführt. Bei Reißversuchen der erfindungsgemäß hergestellten Gummi/Metall-Bindung tritt in den praktisch überwiegenden Fällen der Bruch im Kautschuk ein.

In der Praxis hat sich für den polymeren Filmbildner ein Gemisch aus chlorsulfoniertem Polyethylen und Vinylchlorid/Vinylidenchlorid/Acrylsäure-Copolymerisat als besonders vorteilhaft erwiesen. Das chlorsulfonierte Polyethylen hat in aller Regel aufgrund seiner CI-Gruppen und SO₂Cl-Gruppen einen Chlorgehalt von etwa 25 bis 43 % und einen Schwefelgehalt von etwa 1 bis 1,5 %. Das Vinylchlorid/Vinylidenchlorid/Acrylsäure-Copolymerisat ist ein Emulsionspolymerisat aus
8 bis 33 Gew.-% Vinylchlorid
65 bis 90 Gew.-% Vinylidenchlorid
2 bis 15 Gew.-% Acrylat.

In der Mischung aus chlorsulfoniertem Polyethylen und vorstehendem Copolymerisat kann der Anteil des Copolymerisats bis zu 50 Gew.-% betragen. Vorzugsweise beträgt er 15 bis 25, insbesondere 20 Gew.-%.

Als aromatische Poly-nitroso-Verbindung kommen Verbindungen mit ein oder zwei aromatischen Kernen, die zwei bis vier Nitrosogruppen tragen, in Betracht. Diese Verbindungen können am Kern noch weitere Substituenten tragen. Geeignete Verbindungen sind beispielsweise:
m-Dinitrosobenzol, p-Dinitrosobenzol,
m-Dinitrosonaphthalin, p-Dinitrosonaphthalin,
2,5-Dinitroso-p-cymen, 2-Methyl-1,4-dinitrosobenzol,
2-Methyl-5-chlor-1,4-dinitrosobenzol,
2-Fluor-1,4-dinitrosobenzol,
2-Methoxy-1,3-dinitrosobenzol,
5-Chlor-1,3-dinitrosobenzol,
2-Methoxy-1,3-dinitrosobenzol,

5-Chlor-1,3-dinitrosobenzol, 2-Benzyl-1,4-dinitrosobenzol und 2-Cyclohexyl-1,4-dinitrosobenzol. In dem erfindungsgemäßen Haftmittel wird der Einsatz von Dinitrosobenzol oder Dinitrosonaphthalin bevorzugt. Die genannten Verbindungen können dabei am Kern noch weitere Substituenten tragen. Anstelle der Nitrosoverbindungen können auch die entsprechenden Oxime mit Oxidationsmitteln, wie Vulkanisationsbeschleuniger, Chromat oder Dichromat, oder die entsprechenden Nitroverbindungen mit Reduktionsmitteln, wie Bariumoxid, eingesetzt werden.

Das Haftmittel gemäß der Erfindung kann des weiteren noch an sich bekannte haftverbessernde Zusätze enthalten, wie Ruß, Kieselsäure, Calciumcarbonat, Oxide der Metalle Al, Ca, Zn, Mg, Pb, Zr, ferner Zirkoniumsalze wie Zirkoniumaluminat, Bleisalze anorganischer und/oder organischer Säuren wie basisches Bleicarbonat, mehrwertige Alkohole wie Pentaerythrit, organische Peroxide wie Dicumylperoxid, organofunktionelle Silane wie gamma-Aminopropyl-triethoxysilan, haftverbessernde Harze wie Phenolformaldehydharze einzeln oder in Mischung enthalten.

Zwecks Erzielung stabiler Dispersionen werden bevorzugte Dispergierhilfsmittel eingesetzt. Zu diesen gehören Additionsprodukte aus Alkylphenolen, wie Nonylphenol, und Ethylenoxid, Fettalkohol oder Fettalkoholpartialester der Phosphorsäure. Die Dispersion kann ferner noch mit Polyvinylalkohol oder wasserlöslichen Kolloiden, wie Methylcellulose, Methylhydroxylpropylcellulose oder Hydroxyethylcellulose, stabilisiert werden.

Ein bevorzugtes Haftmittel gemäß der Erfindung ist gekennzeichnet durch eine wäßrige Dispersion einer Feststoffzusammensetzung aus

| | | |
|---|---|---|
| 100 | Gew.-Teilen | polymerer Filmbildner aus einer Mischung von chlorsulfoniertem Polyethylen und Vinylchlorid/Vinyliden-chlorid/Acrylsäure-Polymerisat |
| 5 bis 100 | " " | p-Dinitrosobenzol |
| 5 bis 100 | " " | Phenylen-bis-maleinsäureimid |
| 0 bis 200 | " " | Ruß und basisches Bleicarbonat. |

Weitere bevorzugte Zusammensetzungen sind in der nachstehenden Tabelle aufgeführt (in Gew.-Teilen):

| | 1 | 2 | 3 | 4 | 5 |
|---|---|---|---|---|---|
| polymerer Filmbildner aus einer Mischung von chlorsulfoniertem Polyethylen und Vinylchlorid/Vinylidenchlorid/Acrylsäure-Polymerisat | 100 | 100 | 100 | 100 | 100 |
| p-Dinitrosobenzol | 5-100 | 5-100 | 5-100 | 5-100 | 5-100 |
| Phenylen-bis-maleinsäureimid | 5-100 | 5-100 | 5-100 | 5-100 | 5-100 |
| Ruß und basisches Bleisalz | 0-200 | 0-200 | 0-200 | 0-200 | 0-200 |
| Phenol-Formaldehyd-Harz | 0-80 | - | - | - | - |
| gamma-Aminopropyltriethoxysilan | - | 0-20 | - | - | - |
| Zirkoniumoxid | - | - | 0-50 | - | - |
| Dicumylperoxid | - | - | - | 0-20 | - |
| Pentaerythrit | - | - | - | - | 0-30 |

Mit dem erfindungsgemäßen Haftmittel können die verschiedensten Kautschuktypen unter Vulkanisationsbedingungen gehaftet werden, wie Naturkautschuk, Polychloroprenkautschuk, Styrol-Butadienkautschuk, Nitrilkautschuk, Kautschuk aus Ethylen/Propylen-Copolymer oder aus Ethylen/Propylen/Dien-Terpolymer.

Als Substrate kommen metallische und nichtmetallische Werkstoffe in Betracht, wie Stahl, rostfreie, gegebenenfalls oberflächenbehandelte wie phosphatierte Stähle, Aluminium, Kupfer, Messing, Bronze, Nickel, Zink und deren Legierungen. Ferner nichtmetallische Materialien, wie Glas, Gewebe aus Glasfasern oder natürlichen oder synthetischen organischen Fasern. Ferner Polyamide, Polyacetale, Polyester und Phenolharz-Preßmassen.

Der Feststoffgehalt des erfindungsgemäßen Haftmittels liegt zwischen 12 und 40 Gew.-% bei einer Viskosität von etwa 10 bis 600 mPa.s (10 bis 600 cP) und ermöglicht das Aufbringen auf die Substratoberflächen in üblicher Weise, wie Pinselauftrag, Aufsprühen, Eintauchen. Nach Beschichtung und Trocknung werden die zu haftenden Flächen zusammengebracht und die Haftung unter Vulkanisationsbedingungen bewirkt.

Organische Lösungsmittel können in untergeordneter Menge mitverwendet werden. Ihr Anteil soll jedoch 15 % nicht überschreiten.

Die Vorteile des erfindungsgemäßen Haftmittels sind in seinem einfachen Aufbau und hoher Lagerstabilität zu sehen, in der universellen Anwendbarkeit auf unterschiedliche Kautschuktypen und unterschiedlichste Substratmaterialien, ferner in der hohen Beständigkeit der Haftverbindung gegen korrosive Einflüsse sowie bei erhöhten Temperaturen und in kochendem Wasser.

Die Erfindung wird in den nachstehenden Beispielen näher und beispielhaft erläutert.

### Beispiel 1

### a) Herstellung des erfindungsgemäßen Haftmittels

### Haftmittel A

100 Gew.-Teile einer 25%igen wäßrigen Dispersion von chlorsulfoniertem Polyethylen, welche als Emulgatoren 2 Gew.-Teile des Natrium-Salzes der disproportionierten Abietinsäure und 0,8 Gew.-Teile Nonylphenoxypolyethylenoxyethanol und 0,2 Gew.-Teile Hydroxyethylcellulose enthält, werden mit 10 Gew.-Teilen einer 50%igen Latex-Dispersion eines Vinylchlorid-Vinylidenchlorid-Acrylat-Polymeren der Zusammensetzung 8 bis 33 Gew.-% Vinylchlorid, 65 bis 90 Gew.-% Vinylidenchlorid, 2 bis 15 Gew.-% Acrylat versetzt. Dieser Dispersion wird eine weitere feingemahlene Dispersion aus 100 Gew.-Teilen Wasser, 12 Gew.-Teilen Dinitrosobenzol, 8 Gew.-Teilen Phenylen-bis-maleinsäureimid, 5 Gew.-Teilen Ruß und 6 Gew.-Teilen basischem Bleicarbonat zugesetzt.

### Haftmittel B

Haftmittel B entspricht im Aufbau Haftmittel A, enthält jedoch anstatt 8 Gew.-Teilen Phenylen-bis-maleinsäureimid 9 Gew.-Teile Diallylacrylamid.

### b) Herstellung der Haftverbindung

Das gebrauchsfertige Haftmittel wurde auf gestrahlte und entfettete Probenkörper aus Stahlplatten, die vorher mit einem für die Gummi-Metall-Haftung üblichen Primer grundiert worden waren, aufgestrichen. Nach dem Auftrag wurden die Proben etwa eine Stunde in Raumluft gelagert. Danach wurden die Probekörper mit den nachfolgend beschriebenen Kautschuken I bis IV vulkanisiert und nach 24 Stunden die Haftung geprüft.

### I. Kautschuk-Mischung NR

| | | |
|---|---|---|
| 100 | Gew.-Teile | Naturkautschuk |
| 1 | " | Stearinsäure |
| 5 | " | Zinkoxid |
| 1 | " | Polymeres |
| | | 2.2.4-Trimethyl-1.2-dihydrochinolin |
| 40 | " | Ruß N-550 |
| 0,5 | " | N-Cyclohexyl-2-benzothiazylsulfenamid |
| 2,5 | " | Schwefel |

Vulkanisationsbedingungen: 12 min bei 160°C

### II. Kautschuk-Mischung SBR

| | | |
|---|---|---|
| 100 | Gew.-Teile | Styrolbutadienkautschuk |
| 1 | " | Stearinsäure |
| 5 | " | Zinkoxid |
| 8 | " | aromatisches Öl |
| 50 | " | Ruß N-330 |
| 1,2 | " | N-Cyclohexyl-2-benzothiazylsulfenamid |
| 0,2 | " | N-Cyclohexylthiophthalimid |
| 1,6 | " | Schwefel |

Vulkanisationsbedingungen: 20 min bei 160°C

### III. Kautschuk-Mischung NBR

| | | |
|---|---|---|
| 100 | Gew.-Teile | Nitrilkautschuk (33 % Acrylnitril) |
| 1 | " | Stearinsäure |
| 5 | " | Zinkoxid |
| 5 | " | Dioctylphthalat |
| 45 | " | Ruß S-300 |
| 1,8 | " | N-Cyclohexyl-2-benzothiazylsulfenamid |
| 2 | " | Schwefel |

Vulkanisationsbedingungen: 15 min bei 150°C

### IV. Kautschuk-Mischung EPDM

| | | |
|---|---|---|
| 100 | Gew.-Teile | Ethylen-Propylen-Terpolymer-Kautschuk |
| 1 | " | Stearinsäure |
| 5 | " | Zinkoxid |
| 50 | " | Ruß N-330 |
| 25 | " | Ruß N-400 |

| | | |
|---|---|---|
| 0,5 | Gew.-Teile | 2-Merkaptobenzothiazol (MBT) |
| 0,5 | " | Tetramethylthiuramdisulfid (TMTD) |
| 1,5 | " | Schwefel |

Vulkanisationsbedingungen: 30 min bei 160°C

### Beispiel 2

Es wurden Haftungsprüfungen mit den erfindungsgemäß hergestellten Haftmitteln (A) und (B) an Probekörpern aus Stahlplatten mit verschiedenen Kautschuk-Mischungen durchgeführt. Zum Vergleich wurden ein Haftmittel (C) auf wäßriger Basis, das als Coaktivator Vinylphosphonsäure enthält, und ein Haftmittel (D), das keinen Coaktivator enthält, mitgeprüft. Die Ergebnisse sind in der Tabelle 1 wiedergegeben.

**TABELLE 1**

| Kautschukmischung | Haftmittel A | | Haftmittel B | | Haftmittel C | | Haftmittel D | |
|---|---|---|---|---|---|---|---|---|
| | Haftwert (MPa) | Bruchbild (%R) | Haftwert (MPa) | Bruchbild (%R) | Haftwert (MPa) | Bruchbild (%R) | Haftwert (MPa) | Bruchbild (%R) |
| NR | 9,4 | 100 | 9,2 | 100 | 7,5 | 65 | 7,0 | 60 |
| SBR | 9,2 | 100 | 9,0 | 100 | 7,0 | 60 | 6,5 | 55 |
| NBR | 9,6 | 100 | 9,0 | 100 | 7,5 | 70 | 6,8 | 70 |
| EPDM | 7,0 | 85 | 6,5 | 80 | 4,2 | 35 | 3,2 | 25 |

### Beispiel 3

Es wurden Peelstreifen gemäß DIN 53531 mit dem erfindungsgemäß hergestellten Haftmittel wie o.g. beschichtet und eine Naturkautschuk-Mischung aufvulkanisiert. Die so hergestellten Gummi-Metall-Teile wurden im Salzsprühklima gemäß DIN 53167 gelagert. Nach verschiedenen Lagerzeiten wurde die Haftung geprüft. Die Ergebnisse sind in der Tabelle 2 wiedergegeben.

**TABELLE 2**

| Lagerzeit im Salzsprühklima (Stunden) | Haftmittel A | | Haftmittel D | |
|---|---|---|---|---|
| | Haftwert (N/mm) | Bruchbild (% R) | Haftwert (N/mm) | Bruchbild (% R) |
| 0 | 12 | 100 | 8 | 80 |
| 168 | 12 | 95 | 8 | 80 |
| 288 | 11 | 95 | 8 | 75 |
| 456 | 11 | 90 | 7 | 75 |

## Patentansprüche

1. Haftmittel zum Verbinden von natürlichen und synthetischen Elastomeren mit metallischen und nicht-metallischen Substraten unter Vulkanisationsbedingungen auf Basis wässriger Dispersionen, welches einen organischen polymeren Filmbildner, eine aromatische Polynitrosoverbindung, einen Coaktivator sowie gegebenenfalls übliche haftverbessernde Zusätze, Füllstoffe und Verarbeitungshilfsmittel enthält, **dadurch gekennzeichnet, dass** die wässrige Dispersion
100 Gewichtsteile eines organischen polymeren Filmbildners in Form von chlorsulfioniertem Polyethylen,
5 bis 100 Gewichtsteile einer aromatischen Polynitrosoverbindung,
5 bis 100 Gewichtsteile des aus Diallylacrylamid oder Phenylen-bis-maleinsäureimid bestehenden Coaktivators sowie
0 bis 200 Gewichtsteile haftverbessernde Zusätze enthält.

2. Haftmittel nach Anspruch 1, **dadurch gekennzeichnet, dass** der organische Filmbildner zusätzlich Vinylchlorid/ Vinylidenchlorid/Acrylsäure-Copolymerisat enthält.

3. Haftmittel nach den Ansprüchen 1 und 2, **dadurch gekennzeichnet, dass** die aromatische Polynitrosoverbindung p-Dinitrosobenzol ist.

4. Haftmittel nach den Ansprüchen 1 bis 3, **dadurch gekennzeichnet, dass** es als haftverbessernden Zusatz Ruß, Kieselsäure, Calciumcarbonat, Oxide der Metalle Al, Ca, Zn, Mg, Pb, Zr, Zirkoniumsalze, Bleisalze anorganischer und/oder organischer Säuren, mehrwertige Alkohole, organische Peroxide, organofunktionelle Silane, Phenol-Formaldehydharze einzeln oder in Mischung enthält.

## Claims

1. An adhesive to connect natural and synthetic elastomers with metallic and non-metallic substrates under vulcanisation conditions based on aqueous dispersions, which contains an organic polymeric film former, an aromatic polynitroso compound, a coactivator and also , if necessary, conventional adhesion-improving additives, fillers and processing adjuvants, **characterised in that** the aqueous dispersion contains 100 parts by weight of an organic polymeric film former in the form of chlorosulphonated polyethylene,
5 to 100 parts by weight of an aromatic polynitroso-compound,
5 to 100 parts by weight of the coactivator consisting of diallylacrylamide or phenylene-bis-maleic acid imide and also
0 to 200 parts by weight adhesion-improving additives.

2. An adhesive according to Claim 1, **characterised in that** the organic film former additionally contains vinyl chloride/vinylidene chloride/acrylic acid copolymer.

3. An adhesive according to Claims 1 and 2, **characterised in that** the aromatic polynitroso compounds is p-dinitrosobenzene.

4. An adhesive according to Claims 1 to 3, **characterised in that** it contains as adhesion-improving additive soot, silicic acid, calcium carbonate, oxides of the metals Al, Ca, Zn, Mg, Pb, Zr, zirconium salts, lead salts of inorganic and/or organic acids, multivalent alcohols, organic peroxides, organofunctional silanes, phenolformaldehyde resins individually or in a mixture.

## Revendications

1. Adhésif pour raccorder des élastomères naturels et synthétiques à des substrats métalliques et non métalliques dans des conditions de vulcanisation sur la base de dispersions aqueuses, qui contient un agent filmogène polymère organique, un composé polynitroso aromatique, un co-activateur et également, si nécessaire, des additifs améliorant l'adhérence, des charges et des adjuvants de traitement classiques, **caractérisé en ce que** la dispersion aqueuse contient ;
100 parties en poids d'un agent filmogène polymère organique sous la forme de polyéthylène chlorosulfoné,
5 à 100 parties en poids d'un composé polynitroso aromatique,
5 à 100 parties en poids du co-activateur constitué de diallylacrylamide ou d'acide phénylène-bis-maléique et également,
0 à 200 parties en poids d'additifs améliorant l'adhérence.

2. Adhésif selon la revendication 1, **caractérisé en ce que** l'agent filmogène organique contient également un copolymère de chlorure de vinyle, de chlorure de vinylidène et d'acide acrylique.

3. Adhésif selon les revendications 1 et 2, **caractérisé en ce que** le composé polynitroso aromatique est le p-dinitrosobenzène.

4. Adhésif selon les revendications 1 à 3, **caractérisé en ce qu'**il contient, comme additif améliorant l'adhérence, de la suie, de l'acide silicique, du carbonate de calcium, des oxydes des métaux Al, Ca, Zn, Mg, Pb, Zr, des sels de zirconium, des sols de plomb d'acides inorganiques et/ou organiques, des alcools multivalents, des peroxydes organiques, des silanes organofonctionnels, des résines de phénolformaldéhyde individuellement ou en mélange.
